(19) Europäisches Patentamt
European Patent Office
Office européen des brevets

(11) EP 0 828 869 B1

(12) # EUROPÄISCHE PATENTSCHRIFT

(45) Veröffentlichungstag und Bekanntmachung des Hinweises auf die Patenterteilung:
**12.12.2001 Patentblatt 2001/50**

(21) Anmeldenummer: **96916084.5**

(22) Anmeldetag: **15.05.1996**

(51) Int Cl.[7]: **D01F 2/00**, D01F 2/04, D01F 2/06, D01F 2/10, D06P 3/60, C08B 31/12

(86) Internationale Anmeldenummer:
**PCT/EP96/02081**

(87) Internationale Veröffentlichungsnummer:
**WO 96/37641 (28.11.1996 Gazette 1996/52)**

(54) **SULFONIERUNG VON REGENERATCELLULOSE MIT SULFONIERTEN POLYMEREN UND VERWENDUNG DER MODIFIZIERTEN FASERN**

SULPHONATION OF REGENERATED CELLULOSE WITH SULPHONATED POLYMERS AND USE OF THE THUS MODIFIED FIBRES

SULFONATION DE CELLULOSE REGENEREE AVEC DES POLYMERES SULFONES ET UTILISATION DES FIBRES AINSI MODIFIEES

(84) Benannte Vertragsstaaten:
**AT DE ES FI GB SE**

(30) Priorität: **24.05.1995 DE 19519025**

(43) Veröffentlichungstag der Anmeldung:
**18.03.1998 Patentblatt 1998/12**

(73) Patentinhaber: **DyStar Textilfarben GmbH & Co. Deutschland KG**
**60318 Frankfurt am Main (DE)**

(72) Erfinder:
- **SCHRELL, Andreas**
  **D-65929 Frankfurt am Main (DE)**
- **HUBER, Bernd**
  **D-93309 Kelheim (DE)**

(56) Entgegenhaltungen:
**WO-A-96/37642** **WO-A-96/37643**
**CH-A- 659 241** **GB-A- 1 336 011**

- **DATABASE WPI Section Ch, Week 8633 Derwent Publications Ltd., London, GB; Class A11, AN 86-215349 XP002012741 & JP,A,61 146 810 (KANEBO KK) , 4.Juli 1986**
- **DATABASE WPI Section Ch, Week 8638 Derwent Publications Ltd., London, GB; Class A11, AN 86-247834 XP002012742 & JP,A,61 174 485 (KANEBO KK) , 6.August 1986**
- **DATABASE WPI Section Ch, Derwent Publications Ltd., London, GB; Class A, AN 68-20789Q XP002012743 & JP,B,44 002 056 (KOKOKU RAYON & PULP CO LTD)**
- **DATABASE WPI Section Ch, Derwent Publications Ltd., London, GB; Class A11, AN 72-44061T XP002012744 & JP,B,47 023 687 (KANEGAFUCHI SPINNING CO L)**
- **DATABASE WPI Section Ch, Week 8023 Derwent Publications Ltd., London, GB; Class A35, AN 80-40723C XP002012745 & JP,A,55 057 084 (SHIKISHIMA BOSEKI K) , 27.April 1980**

Bemerkungen:
Die Akte enthält technische Angaben, die nach dem Eingang der Anmeldung eingereicht wurden und die nicht in dieser Patentschrift enthalten sind.

EP 0 828 869 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

In ihrem Färbeverhalten gleichen Viskosefasern im wesentlichen denen der Baumwollfasern. Zum Färben cellulosischer Natur- und Regeneratfasern sind daher alkalispendende Mittel sowie Elektrolyte notwendig, um befriedigende Fixierergebnisse mit Reaktivfarbstoffen zu erzielen.
Gewünscht sind aber auch Celluloseregeneratfasern, die mit kationischen Fasern unter neutralen Bedingungen gefärbt werden können. Eine solche Faser, z. B. in Mischung mit Acrylfasern, ermöglicht dem Textilveredler ein einbadiges Färben beider Faseranteile und bietet neben den ökologischen auch zeitliche und damit wirtschaftliche Vorteile im Färbeprozeß.

Es bestand daher ein großer Bedarf nach Regeneratcellulosefasern, die sich bezüglich Färben mit kationischen Farbstoffen unter schwach sauren Bedingungen wie Acrylfasern verhalten.

Diese Aufgabe wurde überraschenderweise durch die vorliegende Erfindung gelöst.
Gegenstand dieser Erfindung sind sulfonierte Regeneratcellulosefasern, hergestellt, indem man einer Viskosemasse oder Alkalicellulose oder Celluloselösung einen Modifikator in einer Konzentration von 1 bis 20 Gew.-%, gerechnet als Trockensubstanz und bezogen auf den Cellulosegehalt der Spinnmasse, zusetzt und zu Fasern verspinnt, wobei der Modifikator eine Stärke mit einem Polymerisationsgrad zwischen 200 und 1000, vorzugsweise zwischen 200 und 600, Anhydroglucoseeinheiten ist, die mit einem oder mehreren $C_2$-$C_5$-Alkylsulfonsäure-Resten mit einem Substitutionsgrad zwischen 0,1 und 3, bevorzugt zwischen 0,11 und 2, insbesondere zwischen 0,2 und 1, verethert ist, oder der eine mit Vinylsulfonsäure oder einer Styrolsulfonsäure versetzte Stärke oder eine polymere Vinylsulfonsäure ist.

Bei den veretherten Stärken bedeutet beispielsweise der Substitutionsgrad von 3, daß jede der drei freien OH-Gruppen in jeder Glucoseeinheit verethert ist; ein Substitutionsgrad von 0,1 bedeutet, daß statistisch in jeder zehnten Glucoseeinheit eine OH-Gruppe verethert ist.

Sulfonierte Stärken mit einem Substitutionsgrad von 0,05 sind an sich bekannt (Houben-Weyl, 1987, Bd. E 20, Teil 3, S. 2135-2151), solche mit einem Substitutionsgrad von 0,1 und höher sind jedoch noch nicht beschrieben.

Gegenstand der Erfindung sind daher auch die vorstehend beschriebenen mit einem oder mehreren $C_2$-$C_5$-Alkylsulfonsäure-Resten mit einem Substitutionsgrad zwischen 0,1 und 3, bevorzugt zwischen 0,11 und 2, insbesondere zwischen 0,2 und 1, veretherten Stärken mit einem Polymerisationsgrad zwischen 200 und 1000, vorzugsweise zwischen 200 und 600, Anhydroglucoseeinheiten.

Bevorzugt im Sinne der vorliegenden Erfindung sind besagte Stärkeether, deren Ethergruppe die Formel $-O-(CH_2)_x-SO_3M$ oder $-O-CH_2-CHOH-CH_2-SO_3M$ hat, wobei M Wasserstoff, ein Alkalimetall, wie Li, Na oder K, oder ein Erdalkalimetall, wie Mg oder Ca, ist und x die Zahl 2 oder 3 ist. Besonders bevorzugt sind solche Stärkeether, deren Ethergruppe die Formel $-O-CH_2-CH_2-SO_3M$ oder $-O-(CH_2)_3-SO_3M$ hat.

Die erfindungsgemäßen Stärkeether mit besagtem hohem Substitutionsgrad sind als etwa 20 %ige Lösungen in Wasser fließfähige bis hochviskose Massen von 2 bis 25 Pa·s, die ohne weitere Aufarbeitung bei der Herstellung der Cellulose-Regeneratfasern der Spinnmasse, Alkalicellulose oder Celluloselösung zugesetzt werden können.

Wie erwähnt, liegt der Polymerisationsgrad der erfindungsgemäßen Stärkeether zwischen 200 und 1000 Anhydroglucoseeinheiten. Bei Polymerisationsgraden von kleiner als 100 besteht die Gefahr, daß die Stärkeether nach dem Verspinnen aus der Faser ausgewaschen werden.

Die Herstellung der erfindungsgemäßen Stärkeether erfolgt, indem man eine beliebige Stärke, beispielsweise Kartoffelstärke, Maisstärke oder Weizenstärke, mit einer substituierten $C_2$-$C_5$-Alkylsulfonsäure, deren Substituent(en) (eine) gegenüber OH-Gruppen reaktive Gruppe(n) ist (sind), beispielsweise eine $\alpha$-Chlor-$\beta$-Hydroxy-, eine 1,2-Epoxy- oder eine 1-(Sulfatoethylsulfon)-Gruppe, aufweist oder mit einem cyclischen Sulfonat, bei einem pH-Wert von 9 bis 14, vorzugsweise von 10 bis 13, umsetzt. Die Umsetzungstemperatur beträgt zweckmäßigerweise 15 bis 80°C. Die $C_2$-$C_5$-Alkylsulfonsäure wird, je nach dem gewünschten Substitutionsgrad der Stärke, im molaren Verhältnis Alkylsulfonsäure : einer Anhydroglycoseeinheit von 0,1:1 bis zweckmäßigerweise 4:1 umgesetzt.

Beispiele für die vorstehend genannten substituierten Alkylsulfonsäuren, die zur Veretherung der Stärke eingesetzt werden, sind 2-Chlorethansulfonsäure, 3-Chlorpropansulfonsäure und

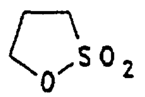 .

Zur Herstellung der erfindungsgemäßen sulfonierten Regeneratcellulosefasern ist auch eine mit Vinylsulfonsäure oder einer Styrolsulfonsäure, beispielsweise p-Styrolsulfonsäure, modifizierte Stärke geeignet. Diese modifizierte Stärke wird hergestellt, indem man eine beliebige Stärke, wie Kartoffelstärke, Maisstärke oder Weizenstärke, mit der genannten Vinyl- oder Styrolsulfonsäure, gegebenenfalls in wäßriger Lösung, bei einem pH-Wert von 8 bis 13 umsetzt.

Zur Herstellung der erfindungsgemäßen sulfonierten Regeneratcellulosefasern sind auch polymere Vinylsulfonsäuren geeignet, die einen Polymerisationsgrad von 200 bis 600 Monomereneinheiten haben. Beispiele sind Polyvinylsulfonsäure-Natriumsalz.

Die zur Herstellung der sulfonierten Cellulose-Regeneratfasern eingesetzten Modifikatoren lassen sich aufgrund ihrer Wasserlöslichkeit in guter Verteilung direkt in die Spinnmasse einrühren oder als wäßrige Lösung, gegebenenfalls mit Hilfe von Emulgatoren, in die Viskosespinnmasse einarbeiten. Der besondere Vorteil im Fall der sulfonierten Stärkeether liegt darin, daß keine Zwischenisolierung erforderlich ist, da bei der Herstellung dieser Stärkeether fließfähige Massen entstehen, die ohne weitere Aufarbeitung zur Modifizierung der Cellulose-Regeneratfasern in die Spinnmasse eingearbeitet werden können. Der Zusatz des Modifikators erfolgt in einer Menge von 1 bis 20 %, gerechnet als Trockensubstanz, vorzugsweise 1 bis 12 Gew.-%, bezogen auf den Cellulosegehalt der Spinnmasse, vor der Fällung und Verformung. Die Filtrierbarkeit der Viskose zeigt keine Verschlechterung im Vergleich mit zusatzfreien Proben, so daß im Zuge des Spinnvorganges kein Verstopfen der Spinndüse zu beobachten ist. Die Verformung der Viskose wird nach üblichen und bekannten Methoden durchgeführt, wie z.B. mit Spinndüsen, einem nachfolgenden Fällbad, sowie gegebenenfalls weiteren Nachbehandlungsbädern.

Eine weitere Möglichkeit zur Herstellung der sulfonierten Cellulose-Regeneratfasern besteht darin, den Modifikator in die Alkalicellulose, einer Vorstufe der Viskose, miteinzurühren. Nach Xanthogenierung und Einpressen in ein saures Fällbad wird auch auf diesem Weg eine sulfonierte Viskosefaser erhalten.

Die nach den beschriebenen Methoden erhaltenen Fasern können nach Verarbeitung zu Geweben und Gewirken nach verschiedenen Verfahren, wie Auszieh-, Klotz- und modernen Druckverfahren, wie Ink-Jet-Verfahren, unter schwach sauren Bedingungen mit kationischen Farbstoffen gefärbt werden.

Gegenstand der vorliegenden Erfindung ist auch ein Verfahren zur Herstellung eines gefärbten oder bedruckten Textilmaterials aus Celluloseregeneratfasern, dadurch gekennzeichnet, daß man einer Viskosemasse, Alkalicellulose oder Celluloselösung besagte Modifikatoren zusetzt und beispielsweise nach dem Viskosespinnverfahren oder aus der Celluloselösung Fasern spinnt, die Fasern zu einem Gewebe oder Gewirke verarbeitet und dieses mit einem oder mehreren kationischen Farbstoffen färbt oder bedruckt.

Das textile modifizierte Fasermaterial, das in das erfindungsgemäße Färbeverfahren eingesetzt wird, kann in allen Verarbeitungszuständen, so als Garn, Flocke, Kammzug und Stückware (Gewebe) vorliegen.

Das erfindungsgemäße Färben der modifizierten textilen Fasermaterialien erfolgt analog bekannten Färbeweisen und Druckverfahren zum Färben und Bedrucken von Fasermaterialien mit wasserlöslichen kationischen textilen Farbstoffen und unter Anwendung der hierfür üblicherweise eingesetzten Temperaturbereiche und Farbstoffmengen. Mit kationischen Farbstoffen wird bei Kochtemperatur bei einem pH-Wert zwischen 4,5 und 6 gefärbt. Elektrolytsalze kommen im allgemeinen nicht zum Einsatz.

Färbeverfahren, die erfindungsgemäß eingesetzt werden können, sind beispielsweise die verschiedenen Ausziehverfahren, wie das Färben auf dem Jigger und auf der Haspelkufe oder das Färben aus langer und kurzer Flotte, das Färben in Jet-Färbemaschinen, das Färben nach Klotz-Kaltverweilverfahren oder nach einem Klotz-Heißdampf-Fixierverfahren.

Zu den erfindungsgemäß nutzbaren Färbeverfahren zählen auch die Drucktechniken, einschließlich des Ink-Jet-Printings und des Transferdruckes.

Die Farbstoffe, die zum Färben der sulfonierten Cellulose-Regeneratfasern genutzt werden, sind kationischer Natur. Handelsnamen solcher Farbstoffe sind beispielsweise ® Maxilone, ® Astrazone, ® Remacryle, ® Basacryle und ® Sandocryle (Ullmanns Enzyklopädie d. technischen Chemie, 4 Aufl. Bd. 13, S. 571 ff.).

Die nachfolgenden Beispiele dienen zur Erläuterung des erfindungsgemäßen Verfahrens. Wenn nicht anders angegeben, sind die in den Beispielen angeführten Teile Gewichtsteile und Prozente Gewichtsprozente. Die Molmassen der verwendeten Stärken sind üblicherweise auf die Monomereinheiten bezogen.

Beispiel 1

In eine betriebsübliche Spinnviskose mit einem Cellulosegehalt von 8,9 %, einem Alkaligehalt von 5 % und einer Viskosität von 38 Kugelfallsekunden bei 30°C wird ein Poly-(p-Styrolsulfonsäure-Natriumsalz) eingerührt. Dabei wird wie folgt gearbeitet:
52 Teile einer 20%igen Poly-(p-Styrolsulfonsäure Natriumsalz)-Lösung werden mit 436 Teilen Spinnviskose vermischt. Diese Vormischung wird in 2522 Teile Spinnviskose eingerührt.

Nach dem Entgasen wird die Spinnmasse nach betriebsüblichen Viskosespinnverfahren in ein schwefelsaures, natrium- und zinksulfathaltiges Bad zu Fasern versponnen, in sauren Bädern verstreckt, geschnitten, gewaschen, präpariert und getrocknet. Das so erhaltene Material kann dann nach einem Ausziehverfahren gefärbt werden.

Dazu wickelt man 30 Teile Viskosefaser auf eine Kreuzspule und behandelt das Garn in einer Garnfärbeapparatur, die 450 Teile (bezogen auf das Gewicht der Ware) einer Flotte, die 0,6 Teile, bezogen auf das Warenanfangsgewicht, eines elektrolythaltigen Farbstoffs der allgemeinen Formel

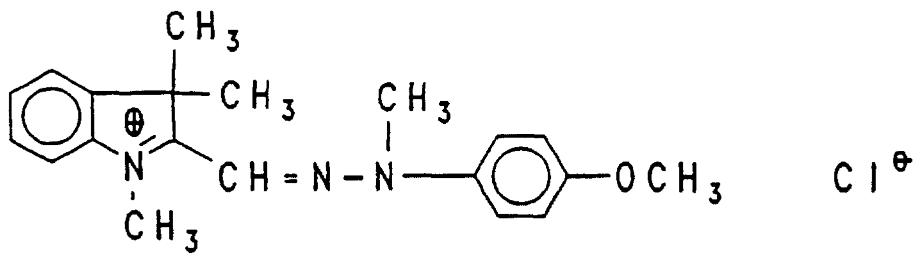

enthält und heizt auf 98°C auf, wobei die Flotte im Wechsel von innen nach außen und von außen nach innen gepumpt wird. Nach 60 min bei dieser Temperatur läßt man die Flotte ab, spült und wäscht nach den üblichen Konditionen die erhaltene Färbung nach. Man erhält eine egal goldgelb gefärbte Faser mit den allgemein guten Echtheiten für kationische Farbstoffe.

Beispiel 2

In eine betriebsübliche Spinnviskose mit einem Cellulosegehalt von 8,9 %, einem Alkaligehalt von 5 % und einer Viskosität von 38 Kugelfallsekunden bei 30°C wird eine mit Vinylsulfonsäure modifizierte Kartoffelstärke eingerührt. Die sulfonierte Stärke wurde zunächst auf folgendem Weg hergestellt: 160 g (0,96 mol) Kartoffelstärke, technisch trocken, werden in einem Kneter in 600 ml Wasser und 17,6 g (0,44 mol) Ätznatron eingetragen. Anschließend wurden zu dieser Mischung 208 g (0,4 mol) einer 25 %igen Lösung von Vinylsulfonsäure gegeben. Die Mischung wurde 4 Stunden bei 90°C geknetet, auf Raumtemperatur abgekühlt und mit Schwefelsäure auf pH 6 gestellt. Das so erhaltene Stärkederivat wird wie folgt in eine Spinnviskose eingearbeitet: 100 Teile der modifizierten Stärke werden mit 436 Teilen Spinnviskose vermischt. Diese Vormischung wird in 2522 Teile Spinnviskose eingerührt.

Nach dem Entgasen wird die Spinnmasse nach betriebsüblichen Viskosespinnverfahren in ein schwefelsaures, Natrium- und Zinksulfat-haltiges Bad zu Fasern versponnen, in sauren Bädern verstreckt, geschnitten, gewaschen, präpariert und getrocknet. 10 Teile dieser trockenen Viskosefasern werden dann in einer Färbeapparatur mit 100 Teilen Wasser versetzt. Man heizt auf 98°C auf und dosiert insgesamt 0,1 Teile eines 50 %igen elektrolythaltigen Farbstoffpulvers der Formel

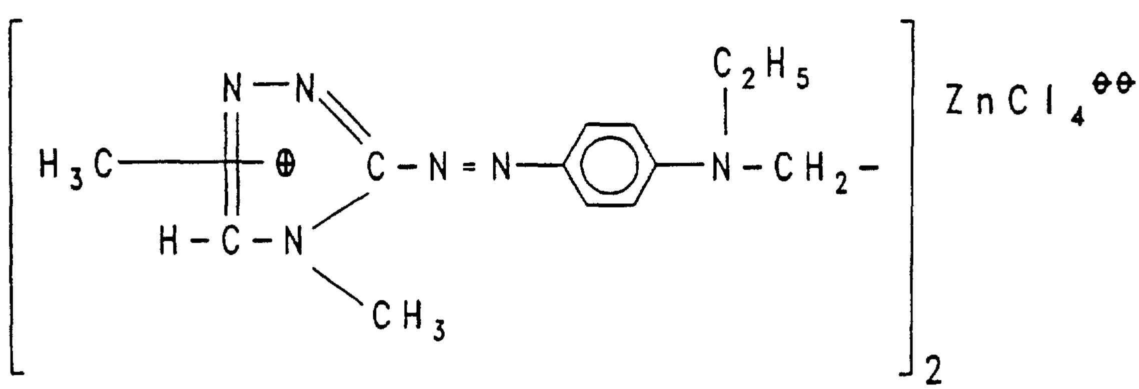

über eine Zeit von 30 min zu. Nach einer Nachlaufzeit von 5 min wird die farblose Restflotte abgelassen und das Material nach gängigen Methoden ausgewaschen und getrocknet. Man erhält eine farbstarke bordofarbene Färbung mit sehr guten Gebrauchsechtheiten.

Beispiel 3

In eine wie unter Beispiel 2 beschriebene Spinnviskose wird eine entsprechend den folgenden Angaben synthetisierte Stärke untergemischt: 200 g (1,2 Mol) Maisstärke, technisch trocken, werden in einem Kneter in 500 ml Wasser und 24 g (0,6 Mol) Ätznatron eingetragen. Anschließend werden zu dieser Mischung 73,6 g (0,4 mol) Chlorethansulfonsäure, gelöst in 300 ml Wasser, gegeben. Die Mischung wird 4 Stunden bei 85°C gerührt, gegebenenfalls durch weitere Wasserzugabe rührfähig gehalten, auf Raumtemperatur abgekühlt und mit Schwefelsäure auf pH 6

gestellt.

Das Produkt wird wie unter Beispiel 2 beschrieben in die Viskose eingerührt. Nach dem Entgasen wird die Spinnmasse nach betriebsüblichen Viskosespinnverfahren in ein schwefelsaures, natrium- und zinksulfathaltiges Bad zu Fasern versponnen, in sauren Bädern verstreckt, geschnitten, gewaschen, präpariert und getrocknet.

Nach dem Weben erhält man ein textiles Viskosegewebe, das direkt in einem Färbeprozeß nach dem Klotz-Verfahren weiterverarbeitet werden kann. Hierzu wird eine wäßrige Farbstofflösung, die in 1000 Vol.-Teilen 20 Teile des Farbstoffs der Formel

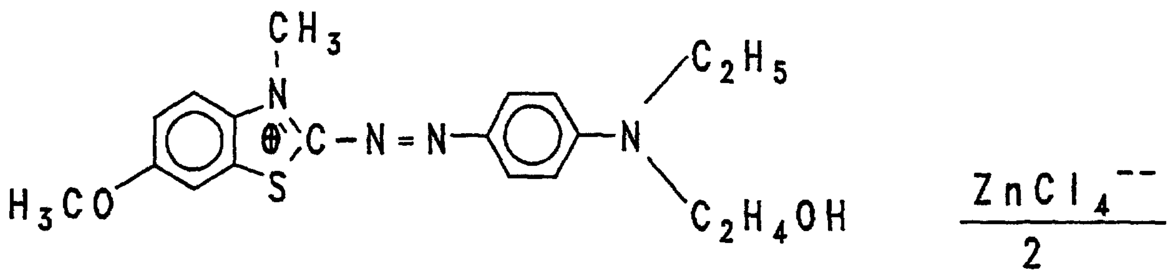

und 3 Teile eines handelsüblichen nichtionogenen Benetzungsmittels gelöst enthält, mittels eines Foulards mit einer Flottenaufnahme von 80 %, bezogen auf das Gewicht des Gewebes, bei 25°C auf das Gewebe aufgebracht. Das mit der Farbstofflösung geklotzte Gewebe wird in einem Dämpfer für 8 Minuten bei 102°C belassen und danach mit kaltem und heißem Wasser, das gegebenenfalls ein handelsübliches Tensid enthalten kann, und gegebenenfalls anschließend nochmals mit kaltem Wasser gespült und getrocknet. Es wird eine farbstarke, gleichmäßig gefärbte blaue Färbung erhalten, die gute Allgemeinechtheiten, insbesondere gute Reib- und Lichtechtheiten, besitzt.

Beispiel 4: Herstellung einer sulfonierten Stärke

200 g (1,2 mol) Kartoffelstärke, technisch trocken, werden in einem Kneter in 500 ml Wasser, in dem zuvor 24 g (0,6 mol) Ätznatron gelöst wurden, eingetragen. Anschließend werden zu dieser Mischung 48,8 g (0,4 mol) 1,3-Propansulton, gelöst in 50 ml Ethanol, gegeben. Die Mischung wird 4 Stunden bei 85°C geknetet, gegebenenfalls durch weitere Wasserzugabe rührfähig gehalten, auf Raumtemperatur abgekühlt und mit Schwefelsäure auf pH 6 gestellt. Die Viskosität beträgt 18 Pa·s bei 20°C.

Zur weiteren Charakterisierung des Stärkederivates werden 5 Teile der viskosen Masse in 100 Teilen Wasser gelöst und mittels einer Membranentsalzungstechnik von nicht umgesetzten Ausgangsprodukten und Neutralisationssalzen befreit. Das gereinigte Stärkederivat wird bis zur Trockene im Vakuum eingedampft. Die Bestimmung des Substitionsgrades erfolgt über eine Schwefelbestimmung der modifizierten Stärke. Der Schwefelgehalt betrug im vorliegenden Fall 3 %. Der Substitionsgrad berechnet sich nach folgenden Formeln:

$$162 + 122/32 \times [\%S] = MW$$

$$[\%S]/32 \times MW : 100 = \text{Substitutionsgrad}$$

Die sulfonierte Stärke hat damit einen Substitutionsgrad von 0,16.

Weitere Beispiele

Man verfährt bei der Modifizierung der Viskose nach den Angaben des Beispiels 1 und färbt unter Verwendung der nachfolgend aufgeführten kationischen Farbstoffe nach üblichen Verfahren.

C.I. Basic Blue 54 (C.I. No. 11 052)

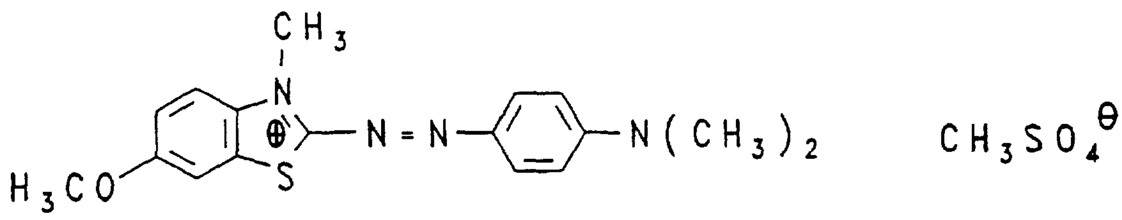

C.I. Basic Blue 16 (C.I. No. 12 210)

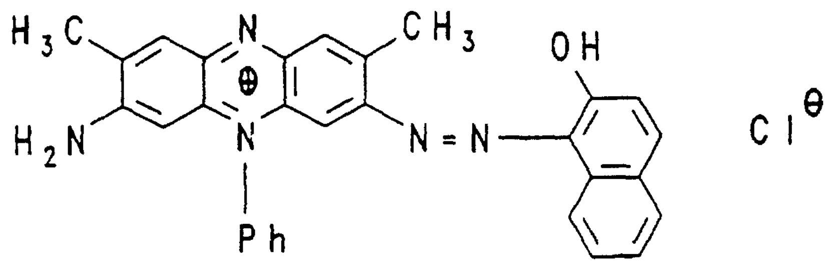

C.I. Basic Blue 26 (C.I. No. 44 045)

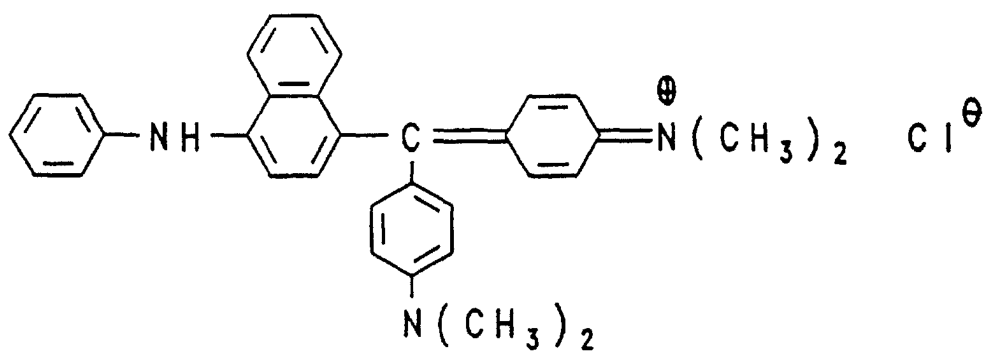

C.I. Basic Blue 73

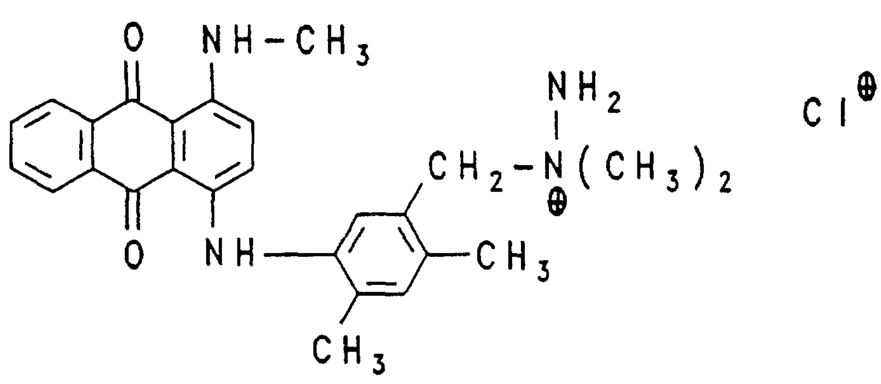

C.I. Basic Yellow 91

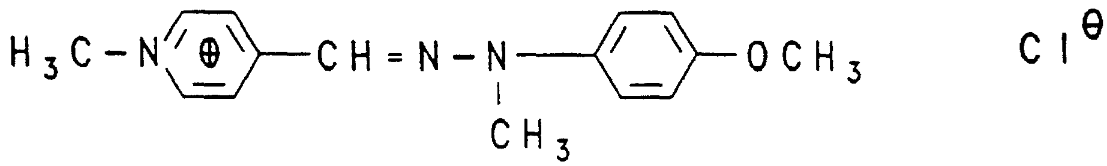

C.I. Basic Green 12

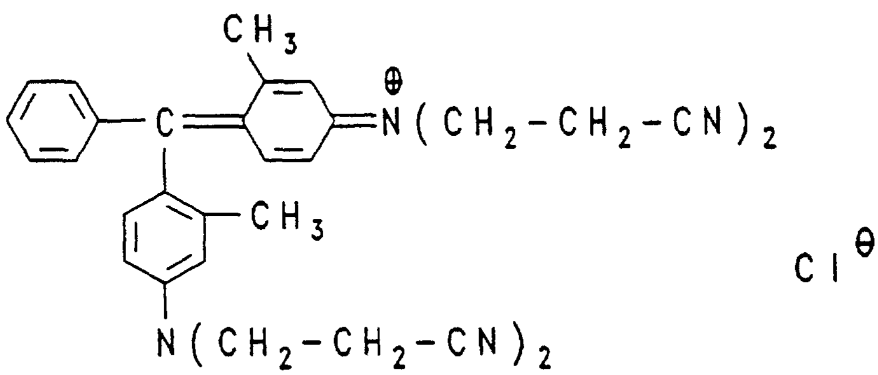

C.I. Basic Orange 30

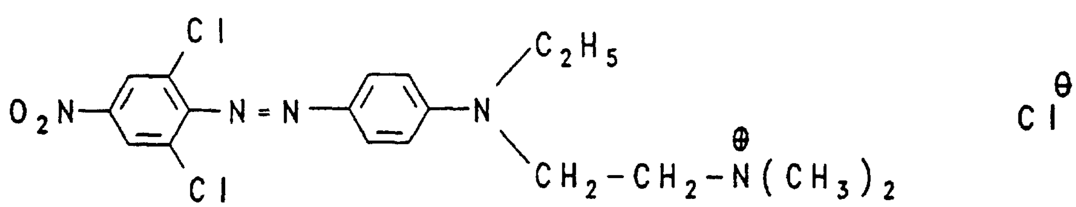

C.I. Basic Orange 38

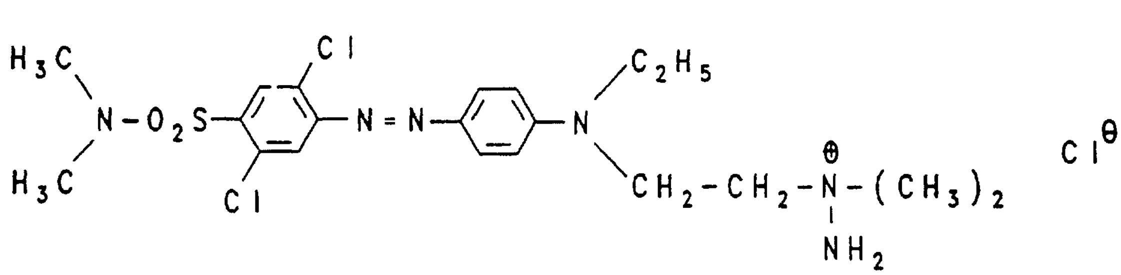

C.I. Basic Orange 41

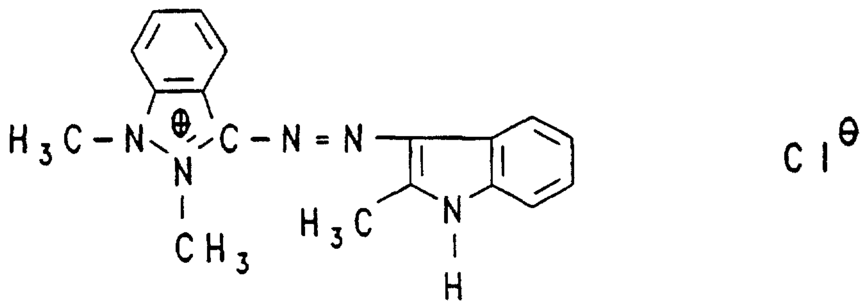

**Patentansprüche**

1. Sulfonierte Regeneratcellulosefasern, hergestellt, indem man einer Viskosemasse oder Alkalicellulose oder Celluloselösung einen Modifikator in einer Konzentration von 1 bis 20 Gew.-%, gerechnet als Trockensubstanz und bezogen auf den Cellulosegehalt der Spinnmasse, zusetzt und zu Fasern verspinnt, wobei der Modifikator eine Stärke mit einem Polymerisationsgrad zwischen 200 und 1 000 Anhydroglucoseeinheiten ist, die mit einem oder mehreren $C_2$-$C_5$-Alkylsulfonsäure-Resten mit einem Substitutionsgrad zwischen 0,1 und 3 verethert ist, oder der eine mit Vinylsulfonsäure oder einer Styrolsulfonsäure versetzte Stärke oder eine polymere Vinylsulfonsäure ist.

2. Sulfonierte Regeneratcellulosefasern nach Anspruch 1, **dadurch gekennzeichnet, daß** die Ethergruppe der veretherten Stärke die Formel $-O-(CH_2)_x-SO_3M$ oder $-O-CH_2-CHOH-CH_2-SO_3M$ hat, wobei M Wasserstoff, ein Alkalimetall oder ein Erdalkalimetall und x die Zahl 2 oder 3 ist.

3. Sulfonierte Regeneratcellulosefasern nach Anspruch 1 oder 2, **dadurch gekennzeichnet, daß** die Ethergruppe der veretherten Stärke die Formel $-O-CH_2CH_2-SO_3M$ oder $-O-(CH_2)_3-SO_3M$ hat, wobei M die Bedeutung Wasserstoff, Li, Na, K, Mg/2 oder Ca/2 hat.

4. Sulfonierte Regeneratcellulosefasern nach Anspruch 1, **dadurch gekennzeichnet, daß** die Styrolsulfonsäure p-Styrolsulfonsäure ist.

5. Sulfonierte Regeneratcellulosefasern nach mindestens einem der Ansprüche 1 bis 4, **dadurch gekennzeichnet, daß** der Modifikator in einer Konzentration von 1 bis 12 Gew.-%, gerechnet als Trockensubstanz, und bezogen auf den Cellulosegehalt der Spinnmasse, zugegeben worden ist.

6. Verfahren zur Herstellung eines gefärbten oder bedruckten Textilmaterials aus Celluloseregeneratfasern, **dadurch gekennzeichnet, daß** man die nach einem oder mehreren der Ansprüche 1 bis 5 modifizierten Celluloseregeneratfasern zu einem Gewebe oder Gewirke verarbeitet und dieses mit einem oder mehreren kationischen Farbstoffen färbt oder bedruckt.

7. Eine mit einem oder mehreren $C_2$-$C_5$-Alkylsulfonat-Resten mit einem Substitutionsgrad zwischen 0,1 und 3, vorzugsweise 0,11 und 2, veretherte Stärke mit einem Polymerisationsgrad zwischen 200 und 1000 Anhydroglucoseeinheiten.

8. Veretherte Stärke nach Anspruch 7, **dadurch gekennzeichnet, daß** die Ethergruppen $-O-(CH_2)_x-SO_3M$ oder $-O-CH_2-CHOH-CH_2-SO_3M$ sind, wobei M Wasserstoff, ein Alkalimetall oder ein Erdalkalimetall und x die Zahl 2 oder 3 ist.

9. Veretherte Stärke nach Anspruch 7 oder 8, **dadurch gekennzeichnet, daß** die Ethergruppen $-O-CH_2CH_2-SO_3M$ oder $-O-(CH_2)_3-SO_3M$ sind, wobei M die Bedeutung Wasserstoff, Li, Na, K, Mg/2 oder Ca/2 hat.

**10.** Veretherte Stärke nach einem oder mehreren der Ansprüche 7 bis 9, **dadurch gekennzeichnet, daß** der Polymerisationsgrad zwischen 200 und 600 Anhydroglucoseeinheiten liegt.

**11.** Verfahren zur Herstellung einer veretherten Stärke nach einem oder mehreren der Ansprüche 7 bis 10, **dadurch gekennzeichnet, daß** man eine Stärke mit einer substituierten $C_2$-$C_5$-Alkylsulfonsäure, deren Substituent(en) (eine) gegenüber OH-Gruppen reaktive Gruppe(n) ist (sind), oder mit einem cyclischen Sulfonat bei einem pH-Wert zwischen 9 und 14, vorzugsweise zwischen 10 und 13, im molaren Verhältnis Alkylsulfonsäure:einer Anhydroglucoseeinheit von 0,1:1 bis 4:1 umsetzt.

**12.** Verfahren nach Anspruch 11, **dadurch gekennzeichnet, daß** der (die) Substituent(en) α-Chlor-β-Hydroxy-, 1,2-Epoxy- oder 1-(Sulfatoethylsulfon) sind.

**13.** Verfahren nach Anspruch 11 oder 12, **dadurch gekennzeichnet, daß** die Stärke mit 2-Chlorethansulfonsäure, 3-Chlorpropansulfonsäure oder 1,3-Propansulton umgesetzt wird.

## Claims

**1.** Sulfonated regenerated cellulose fiber obtained by adding a modifier in a concentration of 1 to 20% by weight, calculated as dry substance, and based on the cellulose content of the spinning dope, to a viscose dope or alkali cellulose or cellulose solution and spinning fiber therefrom, wherefor the modifier is a starch having a degree of polymerization between 200 and 1000 anhydroglucose units which is etherified with one or more $C_2$-$C_5$-alkylsulfonic acid radicals with a degree of substitution between 0.1 and 3, or is a starch admixed with vinylsulfonic acid or a styrenesulfonic acid, or a polymeric vinylsulfonic acid.

**2.** The sulfonated regenerated cellulose fiber of claim 1, wherefor the ether group of the etherified starch has the formula $-O-(CH_2)_x-SO_3M$ or $-O-CH_2-CHOH-CH_2-SO_3M$, where M is hydrogen, an alkali metal or an alkaline earth metal and x is 2 or 3.

**3.** The sulfonated regenerated cellulose fiber of claim 1 or 2, wherefor the ether group of the etherified starch has the formula $-O-CH_2CH_2-SO_3M$ or $-O-(CH_2)_3-SO_3M$, where M is hydrogen, Li, Na, K, Mg/2 or Ca/2.

**4.** The sulfonated regenerated cellulose fiber of claim 1, wherefor the styrenesulfonic acid is p-styrene-sulfonic acid.

**5.** The sulfonated regenerated cellulose fiber of at least one of claims 1 to 4, wherefor the modifier has been added in a concentration of 1 to 12% by weight, calculated as dry substance, and based on the cellulose content of the spinning dope.

**6.** A process for producing a dyed or printed textile material composed of regenerated cellulose fiber, which comprises processing the modified regenerated cellulose fiber of one or more of claims 1 to 5 into a woven or knitted fabric and dyeing or printing said fabric with one or more cationic dyes.

**7.** A starch etherified with one or more $C_2$-$C_5$-alkylsulfonate radicals with a degree of substitution between 0.1 and 3, preferably 0.11 and 2, having a degree of polymerization between 200 and 1000 anhydroglucose units.

**8.** The etherified starch of claim 7, wherein the ether groups are $-O-(CH_2)_x-SO_3M$ or $-O-CH_2-CHOH-CH_2-SO_3M$, where M is hydrogen, an alkali metal or an alkaline earth metal and x is 2 or 3.

**9.** The etherified starch of claim 7 or 8, wherein the ether groups are $-O-CH_2CH_2-SO_3M$ or $-O-(CH_2)_3-SO_3M$, where M is hydrogen, Li, Na, K, Mg/2 or Ca/2.

**10.** The etherified starch of one or more of claims 7 to 9, having a degree of polymerization between 200 and 600 anhydroglucose units.

**11.** A process for preparing an etherified starch as claimed in one or more of claims 7 to 10, which comprises reacting a starch at a pH between 9 and 14, preferably between 10 and 13, with a substituted $C_2$-$C_5$-alkylsulfonic acid whose substituent or substituents is or are reactive toward OH groups or with a cyclic sulfonate in a molar ratio of alkylsulfonic acid: one anhydroglucose unit of 0.1:1 to 4:1.

**12.** The process of claim 11, wherein the substituent or substituents is or are α-chloro-β-hydroxy, 1,2-epoxy or 1-(sulfatoethyl sulfone).

**13.** The process of claim 11 or 12, wherein the starch is reacted with 2-chloroethanesulfonic acid, 3-chloropropanesulfonic acid or 1,3-propanesultone.

**Revendications**

**1.** Fibres de cellulose régénérée sulfonée, obtenues par addition à une masse de viscose ou à de la cellulose alcaline ou à une solution de cellulose d'un modificateur à une concentration de 1 à 20 % en poids, calculé en tant que matière sèche et par rapport à la teneur en cellulose de la masse de filage, et filage en fibres, le modificateur étant un amidon ayant un degré de polymérisation entre 200 et 1 000 unités d'anhydroglucose, qui est éthérifié par un ou plusieurs restes d'acide alkyl($C_2$-$C_5$)sulfonique ayant un degré de substitution compris entre 0,1 et 3, ou étant un amidon additionné d'acide vinylsulfonique ou d'un acide styrènesulfonique, ou un acide vinylsulfonique polymère.

**2.** Fibres de cellulose régénérée sulfonée selon la revendication 1, **caractérisées en ce que** le groupe éther de l'amidon éthérifié correspond à la formule $-O-(CH_2)_x-SO_3M$ ou $-O-CH_2-CHOH-CH_2-SO_3M$, M étant un atome d'hydrogène, un métal alcalin ou un métal alcalino-terreux et x étant le nombre 2 ou 3.

**3.** Fibres de cellulose régénérée sulfonée selon la revendication 1 ou 2, **caractérisées en ce que** le groupe éther de l'amidon éthérifié correspond à la formule $-O-CH_2-CH_2-SO_3M$ ou $-O-(CH_2)_3-SO_3M$, M représentant un atome d'hydrogène, Li, Na, K, Mg/2 ou Ca/2.

**4.** Fibres de cellulose régénérée sulfonée selon la revendication 1, caractérisées en ce l'acide styrènesulfonique est l'acide p-styrènesulfonique.

**5.** Fibres de cellulose régénérée sulfonée selon au moins l'une des revendications 1 à 4, **caractérisées en ce que** le modificateur a été ajouté à une concentration de 1 à 12 % en poids, calculé en tant que matière sèche et par rapport à la teneur en cellulose de la masse de filage.

**6.** Procédé pour la fabrication d'un matériau textile à base de fibres de produit de régénération de cellulose, teint ou imprimé, **caractérisé en ce qu'**on transforme en tissu ou tricot les fibres de produit de régénération de cellulose modifié selon une ou plusieurs des revendications 1 à 5, et on teint ou imprime celui-ci avec un ou plusieurs colorants cationiques.

**7.** Amidon éthérifié par un ou plusieurs restes alkyl ($C_2$-$C_5$)sulfonate ayant un degré de substitution compris entre 0,1 et 3, de préférence entre 0,11 et 2, présentant un degré de polymérisation compris entre 200 et 1 000 unités anhydroglucose.

**8.** Amidon éthérifié selon la revendication 7, **caractérisé en ce que** les groupes éther sont des groupes $-O-(CH_2)_x-SO_3M$ ou $-O-CH_2-CHOH-CH_2-SO_3M$, M étant un atome d'hydrogène, un métal alcalin ou un métal alcalino-terreux et x étant le nombre 2 ou 3.

**9.** Amidon éthérifié selon la revendication 7 ou 8, **caractérisé en ce que** les groupes éther sont des groupes $-O-CH_2-CH_2-SO_3M$ ou $-O-(CH_2)_3-SO_3M$, M représentant un atome d'hydrogène, Li, Na, K, Mg/2 ou Ca/2.

**10.** Amidon éthérifié selon une ou plusieurs des revendications 7 à 9, **caractérisé en ce que** le degré de polymérisation est compris entre 200 et 600 unités anhydroglucose.

**11.** Procédé pour la préparation d'un amidon éthérifié selon une ou plusieurs des revendications 7 à 10, **caractérisé en ce qu'**on fait réagir un amidon avec un acide alkyl($C_2$-$C_5$)sulfonique substitué, dont le(s) substituant(s) est (sont) un(des) groupe(s) réactif(s) avec les groupes OH, ou avec un sulfonate cyclique, à un pH compris entre 9 et 14, de préférence entre 10 et 13, en un rapport molaire acide alkylsulfonique:une unité anhydroglucose de 0,1: 1 à 4:1.

**12.** Procédé selon la revendication 11, **caractérisé en ce que** le(s) substituant(s) est(sont) l'α-chloro-β-hydroxy-, la

1,2-époxy- ou la 1-(sulfatoéthylsulfone).

**13.** Procédé selon la revendication 11 ou 12, **caractérisé en ce que** l'amidon est mis en réaction avec l'acide 2-chloréthanesulfonique, l'acide 3-chloro-propanesulfonique ou la 1,3-propanesulfone.